# EUROPEAN PATENT SPECIFICATION

(11) **EP 1 968 732 B1**
(45) Date of publication and mention of the grant of the patent: **27.03.2013**
(21) Application number: 06828125.2
(22) Date of filing: 21.12.2006
(51) Int. Cl.: B01F 3/04, C02F 3/26

(54) **A MIXER HAVING MULTIPLE GAS INLETS**
MISCHVORRICHTUNG MIT MEHREREN GASEINLÄSSEN
MELANGEUR A PLUSIEURS ENTREES DE GAZ

(30) Priority: 23.12.2005 BR PI0505753
(43) Date of publication of application: 17.09.2008
(73) Proprietor: Oliveira, Joao Carlos Gomes de, Barueri SP (BR)
(72) Inventor: Oliveira, Joao Carlos Gomes de, Barueri SP (BR)
(74) Representative: Hirsch & Associés
(86) International application number: PCT/BR2006/000288
(87) International publication number: WO 2007/071000

(56) References cited:
- EP-A1- 0 475 930
- DE-B- 1 209 859
- US-A- 5 049 320
- US-A- 5 167 806
- US-A- 5 458 738
- US-A1- 2001 050 443
- US-B1- 6 322 055

## Description

### Disclosure of the Invention

The present invention is directed to a mixer having multiple gas inlets, to be used in air and dissolved oxygen flotation processes, in order to oxidize and disinfect the water of lagoons, rivers and water courses in general.

As it is known by one skilled in the art, in water treatment systems and, more specifically, during the water flotation step, mixing ducts are used wherein the water being treated is solubilized with pressurized air that is launched in the course by means of said ducts.

Said mixing ducts are frequently connected to a tubular chamber provided with tangential inlet and outlet points through which the water is launched downward at a controlled speed and pressure flow, in order to form a vortex along the way said flow is conveyed and is mixed to a volume of air injected under pressure at an intermediate point of said tubular chamber. The air and water are mixed by an air spreading chamber that, by being disposed longitudinally in an intermediate portion of the mixing duct between the tangential water inlet and outlet points, allows the volume of injected air to be transformed into microparticles of air by being dragged and then mix with the water flow and conveyed thereby as far as the outlet of said mixing duct, thus providing water solubilized with air.

US-A-5 049 320, which discloses a mixer in accordance with the preamble of claim 1, describes an improved gas dissolving releasing system. The gas dissolving system includes a liquid pressure pump, a pressure vessel with tangential inlet and outlet and multiple gas inlets. The pressure vessel is further provided with a porous centre gas dissolving tube and a wall-mounted porous gas dissolving plate.

An object of the present invention is to provide a mixer having multiple gas inlets that mixture air and oxygen in a water flow flow, in order to assure a high homogeneity of said water/air/oxygen solution, in order to promote the oxidation and disinfection of the water of lagoons, rivers and water courses in general into which said mixture is launched.

Another object of the present invention is to provide a mixer having multiple gas inlets that allows a previous dosage of the amount and type of gas to be injected in the spread chamber, in order to assure that the homogenized water/gas solution is consistent with the needs of the body of water (lagoon, river, canal and water courses in general) to be treated with said mixture.

These and other objects and advantages of the present invention are attained with a mixer in accordance with claim 1 having multiple gas inlets that comprises a chamber for the passage of water provided with two tangential points, a upper water inlet and another lower water outlet, an area for the injection of air being defined there between, the chamber of water flow being formed by two concentrical tubular parts of the same length but having different diameters, defining a ring-shaped transversal section, thus making it possible the full formation of the water vortex inside same; the air injection in the moving water flow being defined by a substantially paralelepipedical-shaped spread box having plain and smooth upper, lower, external and side walls and an internal arcuate wall provided with holes onto which a micro-perforated lining is disposed, said spread box having its arcuate wall disposed in such a way that it surrounds an intermediate portion of the mixing duct in a complementary way and follows the tubular shape of the mixing duct in said portion; the air under pressure to be mixed with the water flow passes through said micro-perforated wall and common to the spread box and the mixing duct; wherein said air comes from external compressors that are coupled to the air inlets defined in the external wall of the spread box. In accordance with the present invention, the spread box also is provided with a plurality of other gas inlets, through which volumes of gases are injected selectively and periodically (O₂, O₃ among others), the inlets of which are connected to flow and pressure meters that make it possible to dose the mixture.

This mixer having multiple gas inlets, among other functions, can be applied to sewage treatment stations, wherein the suitable mixture of gases optimizes the recovery and the disinfection of the treated residual water.

This mixer having multiple gas inlets can also be applied alone or in combination with a plurality of similar equipment in flotation and/or sewage treatment stations, in order to diversify the gas mixture to the water flow flow.

Below, the present invention will be described with reference to the accompanying drawings, wherein:
Figure 1 represents a perspective view of the mixer having multiple gas inlets;
Figure 2 represents a longitudinal cut of the mixer illustrated in the previous figure;
Figure 3 represents a front elevation view of the mixer having multiple gas inlets illustrated in the previous figures; and
Figure 4 represents a top view of the relevant mixer having multiple gas inlets.

In accordance with these illustrations, the mixer having multiple gas inlets object of the present invention is comprised of a water discharge chamber 10 composed of two concentrical tubular parts 1 and 2 of the same length but having different diameters, defining an internal discharge chamber with a ring-shaped transversal section. In said discharge chamber 10 two tangential points are defined, a upper inlet point 3 for the pressurized water and another lower outlet point 4 for the water solubilized with gases, said points defining an area 5 for the injection of gases O₂, O₃, air, among others.

As can be seen in the figures, the mixer having multiple gas inlets 10 has its water discharge chamber fully defined by a ring-shaped internal transversal section, making it possible to attain a full vortex of water inside same; the injection of gases O₂, O₃, air, among others, in the water flow passage being defined by a spread box 20 that surrounds the area 5 for the pressurized injection of gases O₂, O₃, air, among others, defined in duct 10 of the mixer.

As can be seen in the figures, the substantially paralelepipedal-shaped spread box is provided with a plain and smooth upper wall 21, a lower wall 22, an external wall 23, and a side wall 24 and an arcuate internal wall 25 and also provided with holes covered by a lining of porous polyethylene or another equivalent material, defining the area for the injection of gases under pressure, so that the latter pass under pressure towards the chamber 10 and are solubilized by the water flow in a vortex movement.

Although not illustrated, these pressurized gases come from reservoirs and pass through external compressors that are connected to a plurality of inlets 26, 26a, 26b, 26c, 26d, 26e defined in the external wall 23 of the spread box 20 of the mixer 10.

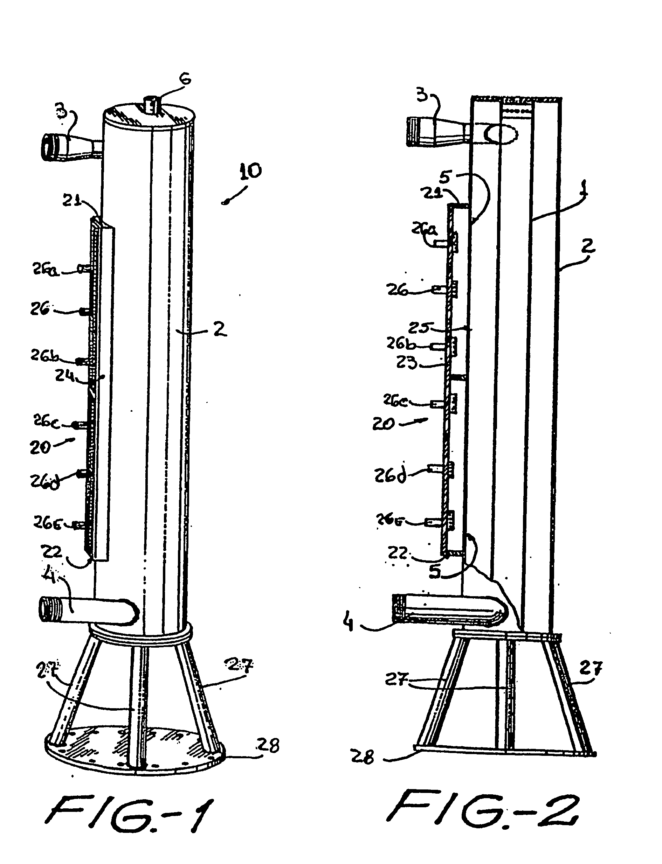

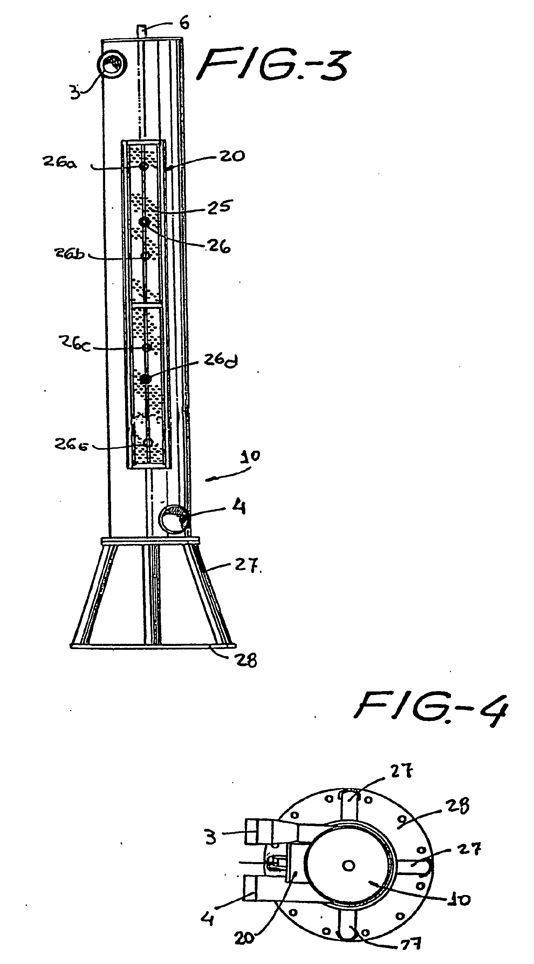

Thus, the water/gas mixer 10 acts as a column for absorbing the gases injected to the inlets 26, 26a, 26b, 26c, 26d, 26e and also has an upper water inlet 3 and can have an upper exhaustion outlet 6 to be connected in line with other equipment, such as dehumidifiers, coal filters and lung vessels for containing the saturated gases removed from the mixture, see figures 1 and 3.

Said mixer 10 is provided with a lower outlet 4 that can be connected to a flotation line assembled under a body of water for promoting the oxidation and/or disinfection thereof, depending on the types of gases chosen for the water solubilization.

As can be seen in the figures, said mixer 10 is assembled and supported by a structural type pedestal composed of a circular base 28 of a larger diameter than the transversal section of mixer 10, and at least three tubular supporting legs 27 that protrude obliquely from the circular base 28 to the bottom wall of mixer 10.

Although a preferred constructive conception has been described and illustrated, it should be pointed out that alterations in the mixer of gases to the design beyond those foreseen in the present invention.

## Claims

1. A mixer having multiple gas inlets of the type consisting of a water discharge chamber (10) formed by two concentrical tubular parts (1, 2) of the same length but having different diameters, defining in the equipment an internal discharge chamber with a ring-shaped transversal section, wherein said discharge chamber (10) is provided with two tangential points, an upper inlet point (3) for the pressurized water and another lower outlet point (4) for the solubilized water, and wherein an area (5) for the injection of gases is defined between said points by a spread box (20) with a plurality of inlets (26, 26a, 26b, 26c, 26d, 26e), **characterized in that** said spread box (20) is provided in the external wall (23) thereof, where the plurality of inlets (26, 26a, 26b, 26c, 26d, 26e) is interconnected to reservoirs of gases that pass through external compressors, said spread box (20) being also provided with holes covered by a lining of porous polyethylene or another equivalent material.

2. A mixer having multiple gas inlets according to claim 1, wherein, besides having an upper water inlet (3) and a lower outlet for solubilized water, said mixer having multiple gas inlets is provided with an upper exhaustion outlet (6) to be connected in line with other equipment, such as dehumidifiers, coal filters and lung vessels for containing the saturated gases removed from the mixture.

3. A mixer having multiple gas inlets according to claim 1, wherein the lower outlet (4) is connected to a flotation line assembled under a body of water for promoting the oxidation and/or disinfection thereof, depending on the types of gases chosen for the water solubilization.

## Patentansprüche

1. Mischer, der mehrere Gaseinlässe der Art, die aus einer Wasserabflusskammer (10) besteht, welche aus zwei konzentrischen rohrförmigen Teilen (1, 2) derselben Länge gebildet ist, die aber unterschiedliche Durchmesser haben, die in der Ausrüstung eine interne Abflusskammer mit einem ringförmigen Querschnitt definiert, wobei die Abflusskammer (10) mit zwei tangentialen Punkten versehen ist, einem oberen Einlasspunkt (3) für das unter Druck stehende Wasser und einem anderen unteren Auslasspunkt (4) für das solubilisierte Wasser, und wobei eine Fläche (5) für die Injektion von Gasen zwischen den Punkten durch einen Verteilungskasten (20) mit mehreren Einlässen (26, 26a, 26b, 26c, 26d, 26e) definiert ist, **dadurch gekennzeichnet, dass** der Verteilungskasten (20) in der Außenwand (23) derselben vorgesehen ist, wo die mehreren Einlässe (26, 26a, 26b, 26c, 26d, 26e) mit Vorratsbehältern von Gasen verbunden sind, die durch externe Kompressoren strömen, wobei der Verteilungskasten (20) auch mit Löchern versehen ist, die durch eine Auskleidung von porösem Polyethylen oder ein anderes äquivalentes Material abgedeckt sind.

2. Mischer, der mehrere Gaseinlässe nach Anspruch 1 hat, wobei der Mischer, der neben einem oberen Wassereinlass (3) und einem unteren Auslass für solubilisiertes Wasser mehrere Gaseinlässe hat, mit einem oberen Absaugauslass (6) versehen ist, der in Reihe mit anderen Ausrüstungsteilen verbunden werden soll, wie zum Beispiel Entfeuchtern, Kohlenfiltern und Lungengefäßen zum Aufnehmen der gesättigten Gase, die aus der Mischung entfernt wurden.

3. Mischer, der mehrere Gaseinlässe nach Anspruch 1 hat, wobei der untere Auslass (4) mit einer Flotationsanlage verbunden ist, die unter einer Wassermasse zur Förderung der Oxidation und/oder Desinfektion derselben montiert ist, je nach den Arten von Gasen, die für die Solubilisierung von Wasser gewählt werden.

## Revendications

1. Mélangeur comportant de multiples entrées de gaz du type constitué d'une chambre (10) de refoulement d'eau composée de deux parties (1, 2) tubulaires concentriques de même longueur mais de diamètres différents, définissant dans l'équipement une chambre interne de refoulement présentant une section transversale annulaire dans lequel ladite chambre (10) de refoulement est pourvue de deux points tangentiels, un point (3) d'entrée supérieur pour l'eau sous pression et un autre point (4) de sortie inférieur pour l'eau à contenu solubilisé, dans lequel une zone (5) d'injection des gaz est définie entre lesdits points par un caisson (20) d'expansion muni d'une pluralité d'entrées (26, 26a, 26b, 26c, 26d, 26e) **caractérisé en ce que** ledit caisson (20) d'expansion est prévu dans la paroi externe (23) de celui-ci, dans lequel la pluralité d'entrées (26, 26a, 26b, 26c, 26d, 26e) est interreliée à des réservoirs de gaz qui passent à travers des compresseurs externes, ledit caisson (20) d'expansion étant également muni de trous couverts par un revêtement de polyéthylène poreux ou un autre matériau équivalent.

2. Mélangeur comportant de multiples entrées de gaz selon la revendication 1, dans lequel, en plus de présenter une entrée d'eau supérieure (3) et une sortie inférieure pour l'eau à contenu solubilisé, ledit mélangeur comportant de multiples entrées de gaz est muni d'une sortie d'échappement supérieure (6) destiné à être relié en ligne avec d'autres équipements, tels que des déshumidificateurs, des filtres à charbon et des réservoirs tampons destinés à contenir des gaz saturés éliminés du mélange.

3. Mélangeur comportant de multiples entrées de gaz selon la revendication 1, dans lequel la sortie inférieure (4) est reliée à une ligne de flottaison mise en place sous une masse d'eau pour favoriser l'oxydation et/ou la désinfection de celle-ci, en fonction des types de gaz choisis pour la solubilisation dans de l'eau.
